# EUROPÄISCHE PATENTSCHRIFT

(11) **EP 1 762 360 B1**
(45) Veröffentlichungstag und Bekanntmachung des Hinweises auf die Patenterteilung: **10.02.2010**
(21) Anmeldenummer: 06014627.1
(22) Anmeldetag: 14.07.2006
(51) Int. Cl.: B29C 45/17, B29C 45/76, G06M 1/00, G07C 3/10

(54) **Spritzgießform mit elektronischem Zähler**
Injection mould with electronic counter
Moule d'injection avec compteur électronique

(30) Priorität: 08.09.2005 DE 202005014156 U
(43) Veröffentlichungstag der Anmeldung: 14.03.2007
(73) Patentinhaber: Otto Männer Innovation GmbH, 79353 Bahlingen (DE)
(72) Erfinder: Männer, Hans-Peter, 79353 Bahlingen (DE)
(74) Vertreter: Dimmerling, Heinz

(56) Entgegenhaltungen:
- EP-A1- 1 486 312
- WO-A-02/40247
- WO-A2-2004/051857
- US-B1- 6 377 649

## Beschreibung

Die Erfindung betrifft eine Spritzgießform nach dem Oberbegriff des Anspruchs 1, mit wenigstens zwei Formhälften, von denen wenigstens eine relativ zu der anderen zum Öffnen und Schließen der Spritzgießform bewegbar ist, und mit einer Zählvorrichtung, welche einen elektronischen Zähler aufweist, welcher mittels eines Aktuators und eines durch Einwirkung des Aktuators ein Signal abgebenden ersten Sensorelements die Zahl der Schließvorgänge der Spritzgießform erfasst, wobei das erste Sensorelement in einem ersten Gehäuse angeordnet ist und der Zähler außerhalb des ersten Gehäuses angeordnet ist und mit dem Sensorelement über eine elektrische Leitung verbunden ist.

Eine derartige Spritzgießform ist beispielsweise aus der US-B-6377649 bekannt.

Es ist Aufgabe der Erfindung, eine eingangs genannte Spritzgießform derart auszubilden, dass die Zählvorrichtung Schließvorgänge der Spritzgießform mit hoher Zuverlässigkeit erfasst.

Die Lösung dieser Aufgabe ergibt sich aus den Merkmalen des kennzeichnenden Teils des Anspruchs 1. Vorteilhafte Weiterbildungen der Erfindung ergeben sich aus den Unteransprüchen.

Gemäß der Erfindung ist eine eingangs genannte Spritzgießform dadurch gekennzeichnet, dass ein Überwachungselement vorhanden ist, mittels dem eine Trennung der Verbindung zwischen dem Sensorelement und dem Zähler erfassbar ist.

Dadurch, dass das erste Sensorelement in einem ersten Gehäuse angeordnet ist und der Zähler außerhalb des ersten Gehäuses angeordnet ist, lässt sich das erste Gehäuse sehr klein ausbilden. Hierdurch steht es nur noch gering aus der betreffenden Formhälfte hervor. Die Gefahr einer Beschädigung ist daher sehr gering.

Durch die sehr kleine Bauform des ersten Gehäuses besteht die Möglichkeit, dass es in einer gegebenenfalls in der betreffenden Formhälfte vorhandenen Ausnehmung angeordnet werden kann. Insbesondere besteht die Möglichkeit, das erste Gehäuse entsprechend dem Gehäuse eines beispielsweise in der Ausnehmung der betreffenden Formhälfte angeordneten mechanischen Zählers auszubilden, wodurch sich der mechanische Zähler problemlos durch eine erfindungsgemäße Zählvorrichtung ersetzen lässt. Dies ist sehr vorteilhaft, da sich hierdurch entsprechend ausgebildete bereits vorhandene Spritzgießformen problemlos nachträglich umrüsten lassen.

Als sehr vorteilhaft hat sich eine Ausführungsform der Erfindung herausgestellt, bei der der Aktuator an dem ersten Gehäuse angeordnet ist. Hierdurch vereinfacht sich die Bauform der Zählvorrichtung sehr. Es ist nur noch ein Element vorhanden, welches den Aktuator und das erste Sensorelement enthält. Dies vereinfacht die Montage der Zählvorrichtung beziehungsweise einen gegebenenfalls erforderlichen Austausch der Zählvorrichtung sehr, da nur noch ein Element an einer betreffenden Formhälfte angeordnet zu werden braucht.

Bei einer weiteren besonderen Ausführungsform der Erfindung ist vorgesehen, dass in dem ersten Gehäuse ein weiteres Sensorelement angeordnet ist, welches über eine elektrische Leitung mit einer Auswerteeinheit verbunden ist, welche außerhalb des ersten Gehäuses angeordnet ist. Hierdurch lassen sich auf einfache Weise weitere Parameter der Spritzgießform wie beispielsweise Temperatur oder Druck erfassen.

Da das weitere Sensorelement von der Auswerteeinheit getrennt ist, kann es sehr klein ausgebildet sein, so dass es problemlos in dem ersten Gehäuse anordenbar ist.

Die Verbindung des weiteren Sensorelements mit der Auswerteeinheit kann unter Umständen über dieselbe elektrische Leitung erfolgen, mittels der das erste Sensorelement mit dem elektronischen Zähler verbunden ist. Sofern die elektrischen Leitungen als Drahtverbindungen ausgebildet sind, können die betreffenden Drähte parallel geführt werden beziehungsweise in einer gemeinsamen Ummantelung geführt werden. Es ist jedoch auch möglich, andere auf dem Gebiet der Datenübertragung bekannte elektrische Leitungen zu verwenden. So könnte die elektrische Leitung beispielsweise als Funkstrecke ausgebildet sein und/oder die Datenübertragung mittels einer so genannten BUS-Verbindung erfolgen.

Gemäß der Erfindung ist der ein Überwachungselement vorhanden, mittels dem die Dauer einer Trennung der Verbindung zwischen dem ersten Sensorelement und dem Zähler, und/oder die Dauer einer Trennung der Verbindung zwischen dem weiteren Sensorelement und der Auswerteeinheit erfassbar ist. Hierdurch kann verhindert werden, dass beispielsweise die Verbindung des Zählers mit dem Sensorelement unbemerkt unterbrochen wird, wodurch die während einer solchen Phase erfolgenden Schließvorgänge der Spritzgießform nicht erfasst würden.

Nachfolgend sind Ausführungsbeispiele der Erfindung anhand der Zeichnung näher erläutert. Es zeigt:
- Fig. 1: eine schematische Darstellung einer Spritzgießform mit zwei Formhälften im geöffneten Zustand mit einem in einer Ausnehmung angeordneten ersten Gehäuse, in dem ein Sensorelement und ein Aktuator angeordnet ist,
- Fig. 2: das in Fig. 1 dargestellte erste Gehäuse in vergrößerter Darstellung und
- Fig. 3: ein zweites Gehäuse in vergrößerter Darstellung, in dem ein elektronischer Zähler und eine Auswerteeinheit angeordnet ist.

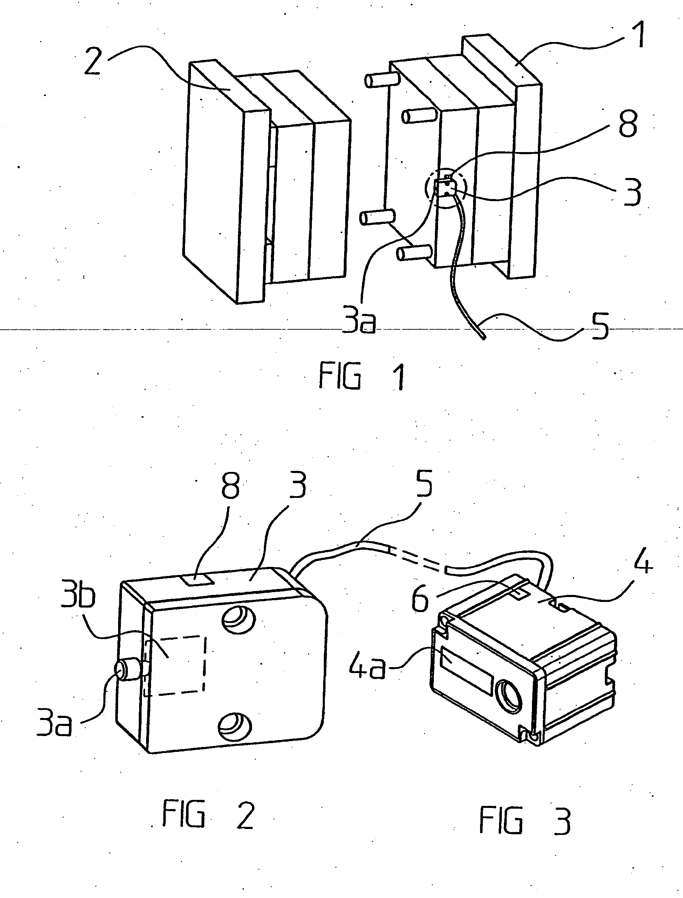

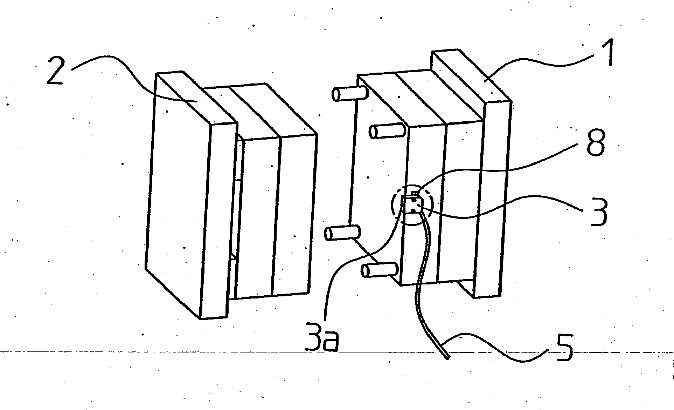

Wie Fig. 1 entnommen werden kann besteht eine Spritzgießform im Wesentlichen aus einer ersten Formhälfte 1 und einer zweiten Formhälfte 2. Die erste Formhälfte 1 ist relativ zur zweiten Formhälfte 2 beweglich. Die die negativen Formen oder Formnester enthaltenden Formplatten sind in Fig. 1 der Übersichtlichkeit wegen nicht dargestellt.

An der ersten Formhälfte 1 ist in einer Ausnehmung ein erstes Gehäuse 3 angeordnet, an welchem ein stiftförmig ausgebildeter Aktuator 3a axial verschieblich angeordnet ist.

Wie insbesondere Fig. 2 entnommen werden kann, ist in dem Gehäuse 3 ein als Piezoelement ausgebildetes erstes Sensorelement 3b derart angeordnet, dass der Aktuator 3a auf das erste Sensorelement 3b eine Kraft ausübt, wenn er eine axiale Bewegung in das erste Gehäuse 3 hinein ausgeführt hat. Hierdurch gibt das erste Sensorelement 3b ein Signal ab.

Das vom ersten Sensorelement 3b abgegebene Signal wird über eine als Drahtverbindung ausgebildete elektrische Leitung 5 an einen in einem zweiten Gehäuse 4 angeordneten elektronischen Zähler 4a geleitet. Das zweite Gehäuse 4 ist in Fig. 3 dargestellt. Es kann vorzugsweise am Bedienpult der betreffenden Spritzgießmaschine angeordnet sein.

Des Weiteren ist im ersten Gehäuse 3 ein Demontagesensor 8 angeordnet, mittels welchem erfasst werden kann, ob beziehungsweise wann und gegebenenfalls wie lange das erste Gehäuse 3 nicht in der Ausnehmung der ersten Formhälfte 1 angeordnet war. Das vom Demontagesensor 8 abgegebene Signal wird mittels der Leitung 5 an eine im zweiten Gehäuse 4 angeordnete Auswerteeinheit geleitet. Dort wird es auf bekannte Weise ausgewertet und weiterverarbeitet.

Im zweiten Gehäuse 4 ist ein Überwachungselement 6 angeordnet, mittels welchem die Verbindung des ersten Sensorelements 3b mit dem elektronischen Zähler 4a überwacht wird. Hierdurch lässt sich feststellen, ob beziehungsweise wann und gegebenenfalls wie lange zwischen dem ersten Gehäuse 3 und dem zweiten Gehäuse 4 keine Verbindung bestanden hat.

Die Abmessungen des ersten Gehäuses 3 entsprechen den Abmessungen eines bisher bei Spritzgießformen verwendeten mechanischen Zählers. Der mechanische Zähler ist somit problemlos durch das erste Gehäuse 3 austauschbar.

## Patentansprüche

1. Spritzgießform mit wenigstens zwei Formhälften (1, 2), von denen wenigstens eine (1) relativ zu der anderen (2) zum Öffnen und Schließen der Spritzgießform bewegbar ist, und mit einer Zählvorrichtung, welche einen elektronischen Zähler (4a) aufweist, welcher mittels eines Aktuators (3a) und eines durch Einwirkung des Aktuators (3a) ein Signal abgebenden Sensorelements (3b) die Zahl der Schließvorgänge der Spritzgießform erfasst, wobei
das erste Sensorelement (3b) in einem ersten Gehäuse (3) angeordnet ist und der Zähler (4a) außerhalb des ersten Gehäuses (3) angeordnet und mit dem Sensorelement (3b) über eine elektrische Leitung (5) verbunden ist,
**dadurch gekennzeichnet, dass**
ein Überwachungselement (6) vorhanden ist, mittels dem eine Trennung der Verbindung zwischen dem Sensorelement (3b) und dem Zähler (4a) erfassbar ist.

2. Spritzgießform nach Anspruch 1,
**dadurch gekennzeichnet,**
**dass** der Aktuator (3a) an dem ersten Gehäuse (3) angeordnet ist.

3. Spritzgießform nach einem der Ansprüche 1 bis 2, **dadurch gekennzeichnet, dass** in dem ersten Gehäuse (3) ein Demontagesensor (8) angeordnet ist, mittels dem eine Demontage des ersten Gehäuses (3) von der Spritzgießform erfassbar ist.

## Claims

1. Injection mould comprising at least two mould halves (1, 2), at least one (1) of which is moveable relative to the other (2) for opening and closing the injection mould, and comprising a counting device which has an electronic counter (4a) which detects the number of closing processes of the injection mould by means of an actuator (3a) and a sensor element (3b) outputting a signal by the action of the actuator (3a), the first sensor element (3b) being arranged in a first housing (3) and the counter (4a) being arranged outside the first housing (3) and being connected to the sensor element (3b) via an electric cable (5),
**characterized in that** the monitoring element (6) is present, by means of which breaking of the connection between the sensor element (3b) and the counter (4a) can be detected.

2. Injection mould according to Claim 1, **characterized in that** the actuator (3a) is arranged on the first housing (3).

3. Injection mould according to either of Claims 1 and 2, **characterized in that** a dismantling sensor (8) by means of which dismantling of the first housing (3) from the injection mould can be detected is arranged in the first housing (3).

## Revendications

1. Moule d'injection comportant au moins deux demi-moules (1, 2) dont au moins un (1) est déplaçable par rapport à l'autre (2) pour permettre l'ouverture et la fermeture du moule d'injection, et comportant un dispositif de comptage qui présente un compteur électronique (4a), lequel détecte le nombre de fermetures du moule d'injection au moyen d'un actionneur (3a) et d'un élément capteur (3b) délivrant un signal sous l'influence de l'actionneur (3a), le premier élément capteur (3b) étant disposé dans un premier boîtier (3) et le compteur (4a) étant disposé à l'extérieur du premier boîtier (3) et relié à l'élément capteur (3b) par une ligne électrique (5),
**caractérisé en ce**
**qu'**il est prévu un élément de surveillance (6) au moyen duquel une coupure de la liaison entre l'élément capteur (3b) et le compteur (4a) peut être détectée.

2. Moule d'injection selon la revendication 1,
**caractérisé en ce**
**que** l'actionneur (3a) est disposé sur le premier boîtier (3).

3. Moule d'injection selon une des revendications 1 à 2,
**caractérisé en ce**
**qu'**un capteur de démontage (8) est disposé dans le premier boîtier (3), au moyen duquel il est possible de détecter un démontage du premier boîtier (3) du moule d'injection.
